Europäisches Patentamt

European Patent Office

Office européen des brevets

(19)

(11) EP 0 978 736 A1

(12) EUROPEAN PATENT APPLICATION

(43) Date of publication:
09.02.2000 Bulletin 2000/06

(51) Int Cl.⁷: **G02B 5/128**

(21) Application number: 98308803.0

(22) Date of filing: 27.10.1998

(84) Designated Contracting States:
**AT BE CH CY DE DK ES FI FR GB GR IE IT LI LU MC NL PT SE**
Designated Extension States:
**AL LT LV MK RO SI**

(30) Priority: 28.10.1997 GB 9722642
31.07.1998 GB 9816617

(71) Applicant: **Melba Products Limited**
**Bury, Lancs. BL9 7UA (GB)**

(72) Inventor: **Dawson, John**
**Nr. Bolton Lancashire BL7 0BP (GB)**

(74) Representative: **Ajello, Michael John**
**Urquhart-Dykes & Lord**
**Greg's Buildings**
**1 Booth Street**
**Manchester M2 4DU (GB)**

(54) **Retro-reflective assemblies**

(57) A retro-reflective assembly (10) comprising a substrate (11) in which a layer of optical glass beads (12) is embedded with a non-metallic reflective coating (13, 14) beneath the beads. A top and/or bottom layer (15, 16) may be welded together and/or to the substrate (11) by high frequency welding along lines (19) to provide enclosed pockets within the assembly.

FIG.1

EP 0 978 736 A1

## Description

THIS INVENTION relates to retro-reflective assemblies e.g. as used in hazard warning or traffic control devices or on clothing or other articles.

According to this invention, a retro-reflective assembly comprises a substrate including a layer of optical bodies having a non-metallic reflective coating.

The assembly may comprise a substrate in which a layer of glass or optical beads is partly embedded with reflective non-metallic material between at least some of the beads and the substrate.

The substrate may comprise an adhesive layer which receives the beads.

The non-metallic material may extend over the exposed surface of the substrate between the beads.

The assembly may comprise a top and/or a bottom layer.

The substrate and one or both of the top and bottom layers may be secured together by high-frequency welding.

The invention may be performed in various ways and one specific embodiment with possible modifications will now be described by way of example with reference to the accompanying diagrammatic drawings, in which:-

Fig. 1 is a section through part of a retro-reflective assembly;

Fig. 2 is a section of a substrate and coating;

Fig. 3 is like Fig. 2 but with beads;

and Fig. 4 is a front view of part of an assembly.

A retro-reflective assembly 10 comprises a substrate 11 on which a layer of optical glass beads 12 is partly embedded. Before being embedded in the layer 11 the beads 12 are coated with a non-metallic light-reflective coating 13 referred to later. After embedding, the exposed part of the coating may be removed leaving a coating layer 14 beneath the heads 12. This layer 14 acts to reflect light.

Preferably the beads 12 are covered with a transparent outer layer 15 e.g. of polyvinyl chloride.

Optionally, a flexible layer 16 e.g. of polyvinyl chloride is secured at the back of the substrate 11.

Preferably the layers 11, 15 or 11, 16 or 11, 15, 16 are secured together by high-frequency radio welding e.g. in a frequency band including 27 megahertz. This is schematically indicated at 17. Normally the periphery 18 would be welded. The lines of welding 19 may form pockets, Fig. 4.

The substrate 11 would include material e.g. polyvinyl chloride which is responsive to high frequency welding.

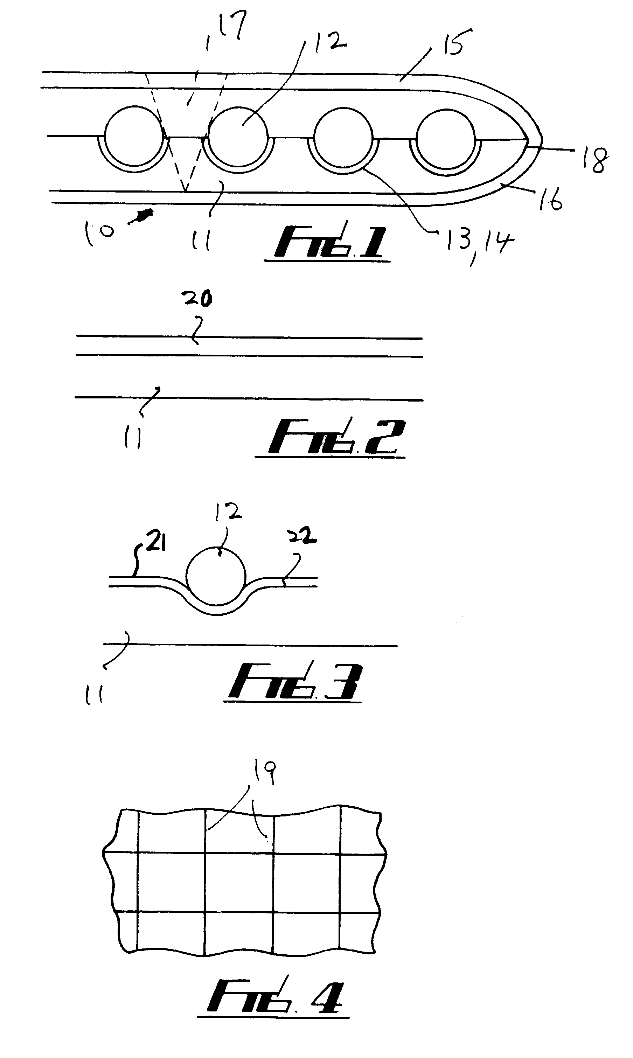

The top surface of the substrate 11 may have an adhesive layer 20 before receiving the coated beads 12, Fig. 2.

In another example, a non-metallic reflective coating 21 is applied to the top surface 22 of the substrate and uncoated beads 12 are partly embedded thereafter, Fig. 3.

Not all the beads need have coating 13; not all the surface of the substrate 11 need be covered with beads 12.

The embedding of the beads 12 is carried out in known manner as is the welding.

The top and bottom layers may be multi-layers and may include reinforcement.

Examples of suitable materials for the coating 13 are saturated Bismuth Oxide and saturated Hexafloro aluminate applied to the beads as an aqueous solution using $\frac{1}{4}$ wave coating technology to apply, preferably, two layers such that the reflective properties of the coating is derived from the difference between the refractive indeces of the respective layers. Additional multiple layers will serve to increase the retro-reflective performance.

Because the coating 13 is non-metallic it does not interfere with high frequency welding.

The welding apparatus can be adapted also to cut the material at the periphery.

If the assembly is secured by means other than high-frequency welding, e.g. by adhesive, the top and bottom layers need not comprise material responsive to such welding.

The substrate 11 may comprise polyurethane.

The use of a non-metallic material to obtain the reflective effect obviates the need for handling metals or metallic material with its attendant difficulties and hazards.

To enhance the brightness and/or colour of the product, there may be dispersed in the substrate or binding layer 11, a particulate ceramic material such as Mica, preferably Zirconia, of sub-micron size, alternatively or in addition a larger particulate dispersion may be used to provide, for example, a specular flake effect. For preference, the particulate dispersion should be concentrated near the surface of the substrate at which the beads 12 are applied.

A retro-reflective material produced as aforesaid provides a material which has a silvery appearance. For certain applications it may be beneficial for the material to appear white in daylight.

This can be achieved by a variety of means.

For example, there may be included in the adhesive layer a surfactant which causes the particulates contained within the adhesive layer to migrate towards the embedded glass beads.

This results in the natural opaqueness of the binder layer being predominantly visible to the naked eye, hence the material appears white.

**Claims**

1. A retro-reflective assembly comprising a substrate including a layer of optical bodies having a non-metallic reflective coating.

2. A retro-reflective assembly according to Claim 1, wherein the substrate includes a layer of glass or optical beads partly embedded therein with reflective non-metallic material between at least some of the beads and the substrate.

3. A retro-reflective assembly according to Claim 1 or Claim 2, wherein the substrate comprises an adhesive layer to receive the beads.

4. A retro-reflective assembly according to any one of Claims 1 to 3 wherein the non-metallic reflective coating extends over the exposed surface of the substrate between the optical bodies.

5. A retro-reflective assembly according to any preceding claim including a top and/or a bottom layer.

6. A retro-reflective assembly according to Claim 5, wherein the substrate and one or both of the top and/or bottom layers are secured together by high-frequency welding.

7. A retro-reflective assembly according to Claim 2, wherein the glass or optical beads are coated with a non-metallic light reflective coating, the exposed part thereof after embedding of the beads within the substrate, having been removed to leave a coated layer beneath the beads.

8. A retro-reflective assembly according to Claim 5, wherein the top and or bottom layer is transparent and of polyvinylchloride.

9. A retro-reflective assembly according to Claim 6, wherein the top and/or bottom layer is secured to the substrate by high-frequency welding in a frequency band including 27mHz.

10. A retro-reflective assembly according to Claim 6, wherein the substrate and one or both of the top and bottom layers are welded together by high-frequency welding along lines which form enclosed pockets within the assembly.

11. A retro-reflective assembly according to Claim 1 or Claim 2, wherein the non-metallic reflective coating is applied directly to a surface of the substrate with uncoated beads embedded within the coating and the substrate.

12. A retro-reflective assembly according to any preceding claim, in which the non-metallic reflective coating is a saturated bismuth oxide.

13. A retro-reflective assembly according to any one of Claims 1 to 11, wherein the non-metallic reflective coating is a saturated Hexofluro aluminate.

14. The retro-reflective assembly according to any preceding claim, wherein the non-metallic reflective coating is applied to the beads as an aqueous solution using quarter-wave coating technology.

15. A retro-reflective assembly according to any preceding claim, wherein at least two layers of non-metallic reflective coating are applied to the optical bodies.

16. A retro-reflective assembly according to any preceding claim wherein the substrate includes a dispersion of a particulate ceramic material to enhance its brightness and/or colour.

17. A retro-reflective assembly according to any preceding claim, having a white appearance in daylight.

18. A retro-reflective assembly according to Claim 17, including a surfactant causing particulate materials within the assembly to migrate towards the optical bodies.

19. A retro-reflective assembly substantially as hereinbefore described, with reference to, and as illustrated in, the accompanying drawings.

Fig.1

Fig.2

Fig.3

Fig. 4

European Patent
Office

**EUROPEAN SEARCH REPORT**

Application Number

EP 98 30 8803

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | WO 97 10378 A (MINNESOTA MINING & MFG) 20 March 1997 * abstract; figure 1 * * page 16, line 5 - page 17, line 9 * | 1-5, 12-14,19 | G02B5/128 |
| X | US 3 700 305 A (BINGHAM WALLACE KARL) 24 October 1972 * column 2, line 53 - column 5, line 14; figures 1,2 * | 1-3, 12-17 | |
| X | EP 0 255 251 A (MINNESOTA MINING & MFG) 3 February 1988 * page 4, line 49 - page 5, line 44; figure 1 * | 1-3, 12-17 | |
| A | GB 2 255 312 A (SWINTEX) 4 November 1992 * page 8 - page 9; figure * | 6-10 | |
| A | EP 0 593 826 A (SWINTEX) 27 April 1994 * column 8, line 23 - column 9, line 11; figures 1,3 * | 6-10 | **TECHNICAL FIELDS SEARCHED** (Int.Cl.6) G02B |

The present search report has been drawn up for all claims

| Place of search | Date of completion of the search | Examiner |
|---|---|---|
| BERLIN | 20 January 1999 | von Moers, F |

EPO FORM 1503 03 82 (P04C01)

**EP 0 978 736 A1**

## ANNEX TO THE EUROPEAN SEARCH REPORT
## ON EUROPEAN PATENT APPLICATION NO.

EP 98 30 8803

This annex lists the patent family members relating to the patent documents cited in the above-mentioned European search report.
The members are as contained in the European Patent Office EDP file on
The European Patent Office is in no way liable for these particulars which are merely given for the purpose of information.

20-01-1999

| Patent document cited in search report | | Publication date | Patent family member(s) | | | Publication date |
|---|---|---|---|---|---|---|
| WO 9710378 | A | 20-03-1997 | US | 5631064 | A | 20-05-1997 |
| | | | AU | 6765496 | A | 01-04-1997 |
| | | | EP | 0864010 | A | 16-09-1998 |
| US 3700305 | A | 24-10-1972 | AR | 211758 | A | 15-03-1978 |
| | | | AT | 327750 | B | 10-02-1976 |
| | | | AT | 1064771 | A | 15-04-1975 |
| | | | AU | 458362 | B | 27-02-1975 |
| | | | AU | 3605671 | A | 31-05-1973 |
| | | | CA | 946805 | A | 07-05-1974 |
| | | | DE | 2160907 | A | 29-06-1972 |
| | | | DK | 128197 | B | 18-03-1974 |
| | | | FR | 2117893 | A | 28-07-1972 |
| | | | GB | 1350649 | A | 18-04-1974 |
| | | | NL | 7116535 | A,B | 16-06-1972 |
| | | | SE | 378915 | B | 15-09-1975 |
| | | | ZA | 7107807 | A | 30-08-1972 |
| EP 0255251 | A | 03-02-1988 | US | 4763985 | A | 16-08-1988 |
| | | | CA | 1278991 | A | 15-01-1991 |
| | | | DE | 3788167 | D | 23-12-1993 |
| | | | DE | 3788167 | T | 26-05-1994 |
| | | | JP | 2566970 | B | 25-12-1996 |
| | | | JP | 63038902 | A | 19-02-1988 |
| | | | KR | 9602306 | B | 16-02-1996 |
| | | | NO | 301194 | B | 22-09-1997 |
| GB 2255312 | A | 04-11-1992 | NONE | | | |
| EP 0593826 | A | 27-04-1994 | GB | 2255313 | A,B | 04-11-1992 |

EPO FORM P0459

For more details about this annex : see Official Journal of the European Patent Office, No. 12/82

6